# EUROPÄISCHE PATENTSCHRIFT

(11) **EP 1 144 830 B1**
(45) Veröffentlichungstag und Bekanntmachung des Hinweises auf die Patenterteilung: **01.12.2004**
(21) Anmeldenummer: 00975802.0
(22) Anmeldetag: 28.09.2000
(51) Int. Cl.: F02D 41/00

(54) **VERFAHREN ZUR FUNKTIONSÜBERWACHUNG UND/ODER REGENERIERUNG EINER GASSONDE**
METHOD FOR MONITORING THE FUNCTION OF A GAS SENSOR AND/OR FOR REGENERATING THE SAME
PROCEDE POUR CONTROLER LA FONCTION UNE SONDE DE GAZ ET/OU DE LA REGENERER

(30) Priorität: 30.09.1999 DE 19947239
(43) Veröffentlichungstag der Anmeldung: 17.10.2001
(73) Patentinhaber: ROBERT BOSCH GMBH, 70442 Stuttgart (DE)
(72) Erfinder: SPRINGHORN, Carsten, 70197 Stuttgart (DE); SCHUMANN, Bernd, 71277 Rutesheim (DE); THIEMANN-HANDLER, Sabine, 70435 Stuttgart (DE)
(86) Internationale Anmeldenummer: PCT/DE2000/003383
(87) Internationale Veröffentlichungsnummer: WO 2001/023729

(56) Entgegenhaltungen:
- EP-A- 0 892 265
- US-A- 4 532 013
- US-A- 4 938 194

## Beschreibung

Die Erfindung betrifft ein Verfahren zur Funktionsüberwachung und/oder Regenerierung einer Gassonde, insbesondere zur Verwendung als Lambdasonde oder NOₓ-Sensor für eine Brennkraftmaschine, nach dem Oberbegriff des Anspruchs 1.

Doppelkammer-NOₓ-Grenzstromsensoren zur Messung der Sauerstoff- oder Stickoxid-Konzentration im Abgas von Kraftfahrzeugen sind seit längerem bekannt und gehen beispielsweise aus der Veröffentlichung SAE Technical Paper Series No. 960334 "Thick Film ZrO₂ NOₓ Sensor" hervor. Diese Sensoren weisen eine sauerstoffionenleitende Keramik, vorzugsweise Zirkonoxid, auf, die zwei mit dem Abgas der Brennkraftmaschine in Verbindung stehende Kammern enthalten. Im Abgas sowie in den Kammern sind mehrere Elektroden angeordnet. In einer ersten Kammer, die über einen porösen Bereich der Keramik direkt mit dem Abgas der Brennkraftmaschine in Verbindung steht, wird mittels zweier Elektroden der Sauerstoff elektrochemisch abgepumpt. An der in einer Kammer angeordneten Kathode findet dabei eine Reduktion der Sauerstoffmoleküle statt. In der sauerstoffionenleitenden Keramik werden die so entstandenen Sauerstoffionen sodann durch die angelegte Spannung zur Anode, die im Abgasstrom angeordnet ist, transportiert, wo die Umkehrung der Reduktion stattfindet, d.h. aus den Sauerstoffionen durch Hinzufügen von Elektronen Sauerstoffmoleküle werden. Die verbrauchten oder regenerierten Elektronen können als elektrischer Strom gemessen werden.

Bei längerer Betriebsdauer tritt eine Reduzierung der Stromdichte durch Alterung ein.

Ein Verfahren zur Funktionsüberwachung mit den Merkmalen des Oberbegriffs des Anspruchs 1 geht aus der US 4,938,194 hervor. Bei diesem Verfahren wird aus dem Wert der Differenz des ersten und des zweiten Pumpstromes auf den Zustand der Gassonde geschlossen.

Aufgabe der Erfindung ist es, ein Verfahren zur Funktionsüberwachung und/oder Regenerierung einer Gassonde der eingangs beschriebenen Art zu vermitteln, welches eine Regenerierung der Gassonde in Abhängigkeit von der erfassten Funktionstüchtigkeit ermöglicht.

Diese Aufgabe wird durch die Merkmale des Anspruchs 1 gelöst. Das erfindungsgemäße Verfahren hat den Vorteil, dass nicht nur die Funktionsfähigkeit der Abgassonde überwacht werden kann, sondern dass dann, wenn eine Alterung der Abgassonde festgestellt wurde, eine Regenerierung der Sonde durch Anlegen einer Regenerierungsspannung, die größer ist als die Sättigungsspannung, vorgenommen werden kann.

Dabei werden vorzugsweise die Schritte zur Prüfung der Funktionsfähigkeit der Sonde und das Anlegen der Regenerierungsspannung mehrmals, vorzugsweise fünf Mal wiederholt, so lange, bis ein vorgegebener Schwellenwert unterschritten wird. Wird dieser Schwellenwert nicht unterschritten, wird eine Störungsmeldung ausgegeben.

Was die Regenerierungsspannung betrifft, so kann sie von gleicher Polarität wie die Pumpspannung sein, möglich ist es aber auch, dass sie eine entgegengesetzte Polarität wie die Pumpspannung aufweist. Die Regenerierungsspannung kann in der mageren, in der fetten Betriebsphase oder auch bei einer Luftzahl λ = 1 der Brennkraftmaschine angelegt werden.

Vorteilhafterweise wird der sich beim Anlegen der Regenerierungsspannung einstellende Strom oder ein anderes Maß für diesen Strom, z.B. die Zeit, während der er angelegt wurde, gemessen, um ein Diagnosesignal zu setzen oder in einen Fehlerspeicher des Sensorteils einen Wert einzugeben.

### Zeichnung

Weitere Vorteile und Merkmale der Erfindung sind Gegenstand der nachfolgenden Beschreibung sowie der zeichnerischen Darstellung eines Ausführungsbeispiels der Erfindung.

In der Zeichnung zeigen:
- Fig. 1: einen aus dem Stand der Technik bekannten NOₓ-Doppelkammersensor;
- Fig. 2: schematisch zur Erläuterung des erfindungsgemäßen Verfahrens zur Prüfung der Funktionsfähigkeit und/oder Regenerierung einer Gassonde den an dem Sensor abgreifbaren Strom über der Pumpspannung und
- Fig. 3: eine Schaltungsanordnung zur Durchführung des erfindungsgemäßen Verfahrens.

### Beschreibung des Ausführungsbeispiels

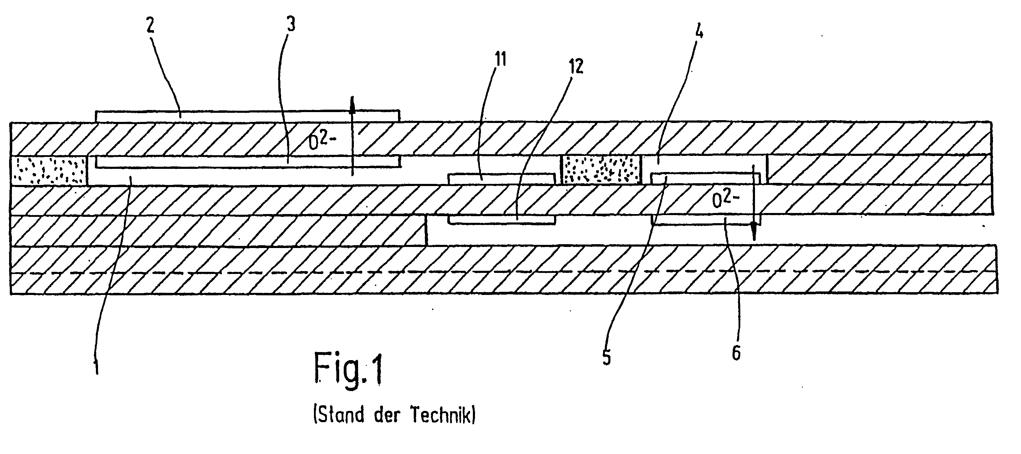

In Fig. 1 ist ein an sich bekannter NOₓ-Doppelkammersensor dargestellt, der beispielsweise aus der Veröffentlichung SAE Technical Paper Series No. 960334, Nobuhido Kato, Kunihiko Nakagaki, and Noriyuki Ina: "Thick Film ZrO₂ NOₓ Sensor", Seiten 136 ff., auf die vorliegend Bezug genommen wird, hervorgeht.

Der in Fig. 1 dargestellte Sensor für Autoabgase umfasst mehrere Schichten aus einer sauerstoffleitenden Keramik, beispielsweise ZrO₂. Der Sensor weist zwei Kammern 1 und 4 auf, die mit dem Abgas über eine Schicht der sauerstoffionenleitenden Keramik in Verbindung stehen. Eine erste Elektrode 2 ist in dem Abgas der Brennkraftmaschine angeordnet, ihr gegenüber liegt in der Kammer 1 eine zweite Elektrode 3.

In der ersten Kammer 1, die über einen porösen Bereich der sauerstoffionenleitenden Keramik direkt mit dem Abgas in Verbindung steht, wird mittels der Elektroden 2, 3 Sauerstoff elektrochemisch abgepumpt. Dabei läuft an der als Kathode wirkenden Elektrode 3 folgende Reaktion ab (Reduktion): O₂(Gasphase) + 4 e⁻(Kathode) → 2 O²⁻ (Sauerstoffionenleiter). In der sauerstoffionenleitenden Keramik werden die O²⁻-Ionen sodann durch die an die Elektroden 2, 3 angelegte Spannung zur als Anode wirkenden Elektrode 2 transportiert, an der folgende Ausbaureaktionen (Umkehrung der obigen Reaktion) stattfindet: 2 O²-(Sauerstoffionenleiter) → O₂(Gasphase) + 4 e⁻(Anode). Die verbrauchten bzw. regenerierten Elektronen können als elektrischer Strom gemessen werden. Die durch das Abpumpen eingestellte niedrige Sauerstoffkonzentration in der ersten Kammer 1 führt zu einer messbaren Spannung zwischen zwei weiteren, mit den Bezugszeichen 11, 12 bezeichneten Elektroden. Diese Spannung kann zur Regelung der zwischen den Elektroden 2, 3 angelegten Spannung dienen.

In einer zweiten Kammer 4, die mit der ersten durch einen porösen Teil der Keramik verbunden ist, wird NOₓ mit Hilfe zweier weiterer Elektroden 5, 6, von denen eine Elektrode 5 als Kathode und die andere Elektrode 6 als Anode wirkt, entfernt. NOₓ zerfällt an der Elektrode 5 zu N₂ und O₂, wobei der Sauerstoff wie oben ausgeführt abgepumpt wird (Reduktion). Die Elektroden 3 und 5 werden aus einem solchen Material hergestellt, dass das zu messende NOₓ erst in der zweiten Kammer 4 reduziert wird. Die Elektroden bestehen beispielsweise aus Platin-Legierungen oder aus Platin-Rhodium-Legierungen.

Bei ausreichend hohen Pumpspannungen sind die zu messenden elektrischen Ströme durch den als Diffusionsbarriere wirkenden porösen Teil begrenzt (Grenzströme). Dies bedeutet, dass sie oberhalb einer bestimmten angelegten Spannung (Grenzspannung) nicht weiter ansteigen. Die oberhalb dieser Grenzspannung zu messenden elektrischen Ströme sind abzüglich eines in den meisten Fällen auftretenden Offsetstroms dann jeweils vor der Kammer existenten Konzentrationen an Sauerstoff oder Stickoxid proportional (Grenzstromsensor). Dabei wird der Sensor so betrieben, dass für beide Kammern 1, 4 eine möglichst geringe Spannung angelegt werden soll. Diese liegt geringfügig höher als die Grenzspannung und wird z.B. im Dauerbetrieb angelegt. Eine möglichst niedrige Grenzspannung kann durch Elektroden erreicht werden, die bei einer bestimmten angelegten Spannung, die kleiner als die Grenzspannung ist und unter definierten äusseren Bedingungen möglichst große elektrische Ströme liefert betrieben werden.

Nachfolgend wird ein Verfahren zur Prüfung der Funktionsfähigkeit und/oder Regenerierung eines derartigen NOₓ-Doppelkammersensors in Verbindung mit Fig. 1, 2 und 3 erläutert.

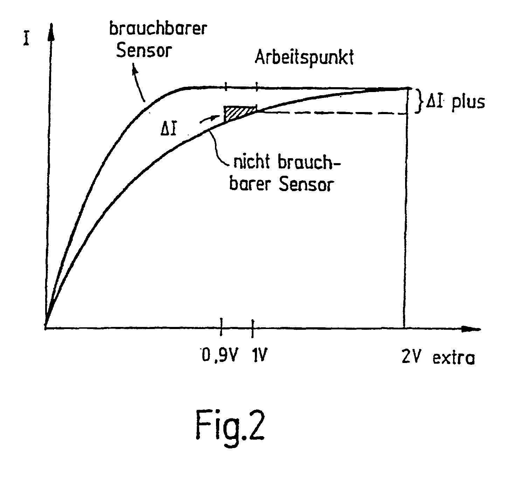

Zwischen die Elektroden 2, 3 oder 5, 6 und einer dafür vorgesehenen Strommessvorrichtung 7 und einer Pumpspannungsquelle 8 wird z.B. ein Schalter 9 eingesetzt, mit dem die Elektroden 2, 3 bzw. 5, 6 von der Spannungsquelle 8 getrennt werden können. Der Schalter 9 wird geöffnet, wenn bei einer definierten Betriebsbedingung des Fahrzeugs durch Abpumpen von Sauerstoff/Stickoxid eine bestimmte Pumpspannung in der ersten/zweiten Kammer 1 bzw. 4 überschritten wird, bzw. wenn die Aufschaltung einer niedrigeren Spannung aus der Pumpspannungsquelle 8 einen geringeren Strom ergibt als der Strom mit der vorher im Dauerbetrieb eingesetzten Spannung. Das Verfahren weist folgende Schritte auf:
a.) Zunächst wird eine erste Pumpspannung angelegt, beispielsweise 1 V (vergl. Fig. 2), und der sich dabei einstellende erste Pumpstrom gemessen.
b.) Sodann wird eine gegenüber der ersten Pumpspannung höhere oder niedrigere zweite Pumpspannung angelegt und der sich dabei einstellende zweite Pumpstrom gemessen. So kann beispielsweise als zweite Pumpspannung 0,9 V angelegt werden, wie in Fig. 2 schematisch dargestellt.
c.) Daraufhin wird die Differenz ΔI des ersten und zweiten Pumpstromes gebildet.
d.) Wenn diese Differenz ΔI einen vorgegebenen und beispielsweise in der Strommessvorrichtung 7 abgespeicherten Wert überschreitet, wird eine vorher experimentell ermittelte Sättigungspumpspannung angelegt und der sich dabei einstellende Pumpstrom mit einem zuvor gespeicherten Mindestpumpstrom verglichen.
e.) Es wird die Differenz ΔI plus des Mindestpumpstroms und des sich bei der Sättigungspumpspannung einstellenden Pumpstroms gebildet.
f.) Wenn diese Differenz ΔI plus einen vorgegebenen Betrag überschreitet, wird von einer weiteren externen Spannungsquelle 10 eine Regenerierungsspannung, die größer ist als die Sättigungsspannung und beispielsweise 7 V beträgt, für eine vorgegebene Zeit, beispielsweise 5 Sekunden, angelegt.

Die Verfahrensschritte a) bis f) werden mehrmals, beispielsweise fünf Mal wiederholt, bis der Betrag der Differenz des ersten und zweiten Pumpstroms einen weiteren vorgegebenen Schwellenwert unterschreitet, d.h. bis ein vorher festgelegter Stromdichtewert oder ein Bruchteil dieses Stromdichtewerts erreicht wird, oder, sofern dies nicht der Fall ist, eine Störungsmeldung ausgegeben wird.

In letzterem Falle ist der Sensor nicht mehr regenerierbar und unbrauchbar.

Durch die Verfahrensschritte a) bis d) wird geprüft, ob der Sensor gealtert ist. In diesem Falle weicht die Differenz ΔI des ersten und des zweiten Pumpstromes von dem vorgegebenen und abgespeicherten Wert ab. Durch die Schritte d) bis f) wird zunächst geprüft, ob der Sensor überhaupt regenerierbar ist, dies ist dann der Fall, wenn die Differenz des Mindestpumpstroms und des sich bei der Sättigungspumpspannung einstellenden Pumpstroms einen vorgegebenen Betrag überschreitet. Ist dies der Fall, wird die Regenerierung durch Anlegen der Regenerierungsspannung, die wesentlich höher ist als die Sättigungsspannung und beispielsweise wie oben dargestellt 7 V gegenüber 2 V Sättigungsspannung beträgt, eine gewisse Zeit (beispielsweise 5 Sekunden) angelegt. Es versteht sich, dass die Regenerierungsspannung in Abhängigkeit von der Differenz ΔI plus, so wie auch von der Differenz ΔI ermittelt werden kann. Die Regenerierungsspannung kann dabei von gleicher oder wechselnder Polarität wie die Pumpspannung im mageren oder im fetten Betriebszustand oder auch bei einer Luftzahl λ = 1 angelegt werden.

Ferner kann die Zeit, in der die Regenerationsspannung an die Elektroden angelegt wird, verlängert und gemessen werden. Diese Zeit oder auch der erreichte Stromwert kann einem Steuergerät gemeldet werden, um ein Diagnosesignal zu setzen oder in einem Fehlerspeicher des Sensorteils einen Wert einzugeben (nicht dargestellt).

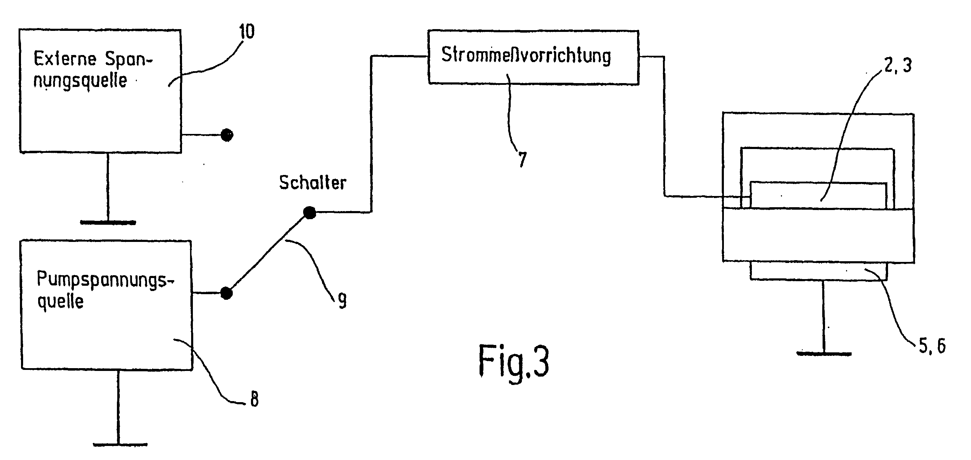

Wie in Fig. 3 dargestellt ist, kann die externe Spannungsquelle 10 durch Umlegen eines Schalters 9 an die Elektroden 2, 3 bzw. 5, 6 des NOₓ-Sensors angelegt werden. In diesem Falle ist die Pumpspannungsquelle 8 abgekoppelt. Es versteht sich aber, dass die externe Spannungsquelle 10 auch als Teil der Pumpspannungsquelle 8 vorgesehen sein kann, wobei die Pumpspannungsquelle 8 dann entsprechend auf eine höhere Leistung ausgelegt werden muss, um eine oben beschriebene Regenerierung des Sensors zu ermöglichen.

## Patentansprüche

1. Verfahren zur Funktionsüberwachung und/oder Regenerierung einer Gassonde, insbesondere zur Verwendung als Lambda-Sonde oder NOₓ-Sensor für eine Brennkraftmaschine, mit einer beheizbaren, Gasmoleküle detektierenden Sondenkeramik, mit einer in einer Kammer (1) angeordneten ersten Pumpelektrode (3) und mit einer im Abgas der Brennkraftmaschine angeordneten zweiten Pumpelektrode (2), wobei zwischen der ersten und zweiten Pumpelektrode mittels einer Pumpspannungsquelle eine Pumpspannung angelegt wird, so dass im Innern der Kammer (1) ein Sauerstoffpartialdruck durch elektrochemisches Abpumpen der Sauerstoffmoleküle eingestellt wird, mit den Schritten:
a) Anlegen einer ersten Pumpspannung und Messung eines ersten Pumpstromes;
b)Anlegen einer gegenüber der ersten Pumpspannung höheren oder niedrigeren zweiten Pumpspannung und Messung eines zweiten Pumpstromes;
c) Bildung der Differenz des ersten und des zweiten Pumpstromes (ΔI);
**gekennzeichnet durch** folgende Schritte:
d)wenn die Differenz (ΔI) einen vorgegebenen Wert überschreitet, Anlegen einer vorher ermittelten Sättigungspumpspannung und Vergleichen des sich dabei ergebenden Pumpstromes mit einem zuvor gespeicherten Mindestpumpstrom;
e)Bildung der Differenz des Mindestpumpstroms und des sich bei der Sättigungspumpspannung einstellenden Pumpstroms (ΔI plus);
f)wenn die Differenz (ΔI plus) des Mindestpumpstroms und des sich bei Anlegen der Sättigungspumpspannung ergebenden Pumpstroms einen vorgegebenen Betrag überschreitet, Anlegen einer von einer weiteren Spannungsquelle erzeugten Regenerierungsspannung, die größer ist als die Sättigungsspannung.

2. Verfahren nach Anspruch 1, **gekennzeichnet durch** mehrmaliges, vorzugsweise fünfmaliges, Wiederholen, der Verfahrensschritte a) bis f) so lange, bis der Betrag der Differenz des ersten und des zweiten Pumpstroms (ΔI) einen weiteren, vorgegebenen Schwellenwert unterschreitet oder, sofern dies nach mehrmaligem Wiederholen nicht der Fall ist, Ausgeben einer Störmeldung.

3. Verfahren nach Anspruch 1 oder 2, **dadurch gekennzeichnet, dass** die Regenerierungsspannung von gleicher Polarität ist wie die Pumpspannung.

4. Verfahren nach Anspruch 1 oder 2, **dadurch gekennzeichnet, dass** die externe Spannung von entgegengesetzter Polarität ist wie die Pumpspannung.

5. Verfahren nach einem der Ansprüche 1 bis 4, **dadurch gekennzeichnet, dass** die Regenerierungsspannung in der mageren Betriebsphase der Brennkraftmaschine angelegt wird.

6. Verfahren nach einem der Ansprüche 1 bis 4, **dadurch gekennzeichnet, dass** die Regenerierungsspannung in der fetten Betriebsphase der Brennkraftmaschine angelegt wird.

7. Verfahren nach einem der Ansprüche 1 bis 4, **dadurch gekennzeichnet, dass** die Regenerierungsspannung bei einer Luftzahl λ = 1 der Brennkraftmaschine angelegt wird.

8. Verfahren nach einem der Ansprüche 1 bis 7, **dadurch gekennzeichnet, dass** ein Maß des sich beim Anlegen der Regenerierungsspannung einstellenden Stroms gemessen und in einem Speicher gespeichert wird.

## Claims

1. Method for monitoring the functioning of and/or regenerating a gas sensor, in particular for use as a lambda sensor or NOₓ sensor for an internal combustion engine, having a heatable sensor ceramic which detects gas molecules, having a first pump electrode (3), arranged in a chamber (1), and having a second pump electrode (2) arranged in the exhaust gas from the internal combustion engine, with a pump voltage being applied between the first and second pump electrodes by means of a pump voltage source, so that an oxygen partial pressure is established in the interior of the chamber (1) by electrochemically pumping out the oxygen molecules, comprising the steps of:
a) applying a first pump voltage and measuring a first pump current;
b) applying a second pump voltage, which is higher or lower than the first pump voltage, and measuring a second pump current;
c) forming the difference between the first and second pump currents (ΔI);
**characterized by** the following steps:
d) if the difference (ΔI) exceeds a predetermined value, applying a previously determined saturation pump voltage and comparing the resulting pump current with a previously stored minimum pump current;
e) forming the difference between the minimum pump current and the pump current which is established at the saturation pump voltage (ΔI plus);
f) if the difference (ΔI plus) between the minimum pump current and the pump current which results when the saturation pump voltage is applied exceeds a predetermined magnitude, applying a regeneration voltage which is generated by a further voltage source and is greater than the saturation voltage.

2. Method according to Claim 1, **characterized by** repeating method steps a) to f) a number of times, preferably five times, until the magnitude of the difference between the first and second pump currents (ΔI) drops below a further, predetermined threshold value or, if this does not happen after a number of repetitions, outputting a fault message.

3. Method according to Claim 1 or 2, **characterized in that** the regeneration voltage is of the same polarity as the pump voltage.

4. Method according to Claim 1 or 2, **characterized in that** the external voltage is of opposite polarity to the pump voltage.

5. Method according to one of Claims 1 to 4, **characterized in that** the regeneration voltage is applied in the lean operating phase of the internal combustion engine.

6. Method according to one of Claims 1 to 4, **characterized in that** the regeneration voltage is applied in the rich operating phase of the internal combustion engine.

7. Method according to one of Claims 1 to 4, **characterized in that** the regeneration voltage is applied at an air ratio λ = 1 of the internal combustion engine.

8. Method according to one of Claims 1 to 7, **characterized in that** a level of the current which is established when the regeneration voltage is applied is measured and stored in a memory.

## Revendications

1. Procédé pour la surveillance de fonctionnement et/ou pour la régénération d'une sonde de gaz, destinée en particulier à être utilisée comme sonde Lambda ou détecteur de NOx pour un moteur à combustion interne, comprenant une céramique de sonde pouvant être chauffée, qui détecte les molécules gazeuses, une première électrode de pompe (3) placée dans une chambre (1) et une deuxième électrode de pompe (2) placée dans les gaz d'échappement du moteur à combustion interne, une tension de pompe étant appliquée entre la première et la deuxième électrode de pompe au moyen d'une source de tension de pompe, de sorte qu'à l'intérieur de la chambre (1), une pression partielle d'oxygène s'établit sous l'effet du pompage électrochimique des molécules d'oxygène, le procédé comprenant les étapes suivantes :
a) application d'une première tension de pompe et mesure d'un premier courant de pompe ;
b) application d'une deuxième tension de pompe, supérieure ou inférieure à la première tension de pompe, et mesure d'un deuxième courant de pompe;
c) formation de la différence entre les premier et deuxième courants de pompe (ΔI),
**caractérisé par**
les étapes suivantes :
d) lorsque le différence (ΔI) devient supérieure à une valeur prédéterminée, application d'une tension de pompe de saturation obtenue antérieurement et comparaison du courant de pompe qui s'établit à ce moment avec un courant de pompe minimum qui a été mémorisé antérieurement,
e) formation de la différence entre le courant de pompe minimum et le courant de pompe (ΔI plus) qui s'établit lors de la tension de pompe de saturation,
f) lorsque la différence (ΔI plus) entre courant de pompe minimum et le courant de pompe qui s'établit lors de l'application de la tension de courant de pompe de saturation devient supérieure à une valeur absolue prédéterminée, application d'une tension de régénération produite par une autre source de tension, et qui est supérieure à la tension de saturation.

2. Procédé selon la revendication 1,
**caractérisé par**
des répétitions multiples, de préférence quintuples, des étapes (a) à (f) du procédé, jusqu'à ce que la valeur absolue de la différence entre le premier courant de pompe et le deuxième courant de pompe (ΔI) devienne inférieure à une autre valeur de seuil prédéterminée, ou encore si ce n'est pas le cas après plusieurs répétitions, émission d'un message d'incident.

3. Procédé selon la revendication 1 ou 2,
**caractérisé en ce que**
la tension de régénération est de même polarité que la tension de pompe.

4. Procédé selon la revendication 1 ou 2,
**caractérisé en ce que**
la tension externe est de polarité opposée à celle de la tension de pompe.

5. Procédé selon une des revendications 1 à 4,
**caractérisé en ce que**
la tension de régénération est appliquée dans la phase de fonctionnement pauvre du moteur à combustion interne.

6. Procédé selon une des revendications 1 à 4,
**caractérisé en ce que**
la tension de régénération est appliquée dans la phase de fonctionnement riche du moteur à combustion interne.

7. Procédé selon une des revendications 1 à 4,
**caractérisé en ce que**
la tension de régénération est appliquée en présence d'un indice d'air λ = 1 du moteur à combustion interne.

8. Procédé selon une des revendications 1 à 7,
**caractérisé en ce qu'**
une mesure du courant qui s'établit lors de l'application de la tension de régénération est mesurée et enregistrée dans une mémoire
